# EUROPEAN PATENT APPLICATION

(11) **EP 0 524 914 A1**
(43) Date of publication of application: **27.01.1993**
(21) Application number: 92830360.1
(22) Date of filing: 07.07.1992
(51) Int. Cl.: B60S 1/08

(54) **A reciprocating drive device, particularly for a rear windscreen wiper for a motor vehicle**

(30) Priority: 15.07.1991 IT TO910556 U
(71) Applicant: INDUSTRIE MAGNETI MARELLI S.p.A., I-20128 Milano (IT)
(72) Inventor: Bechis, Luca, I-20137 Milano (IT); Lombardi, Ruggiero, I-20097 San Donato Milanese (Milano) (IT)
(74) Representative: Quinterno, Giuseppe

(57) **Abstract**

The device includes a control circuit (C) for switching the polarity of the voltage applied to the motor (M) with the aid of an electromechanical device which includes sliding contacts (30 to 36) cooperating with three electrically-conductive surfaces (S1 to S3) on a member (61) which moves as a result of the operation of the motor (M).

## Description

The present invention relates to a reciprocating drive device, particularly for driving a wiper arm for the rear window of a motor vehicle.

Known reciprocating drive devices for front and rear windscreen wipers of motor vehicles include direct-current electric motors which are always rotated in the same sense. In such a device, the rotary motion of the shaft of the motor is converted into a reciprocating rotary motion by a kinematic mechanism which typically includes connecting rods and cranks. These devices are complex, heavy and quite bulky.

The object of the present invention is to provide a drive device in which the reciprocating rotary motion of an output shaft is achieved electrically rather than mechanically, without the need to use any of the kinematic mechanisms used in conventional devices.

According to the invention, this object is achieved by means of a reciprocating drive device, particularly for a wiper arm, including in combination:
a support structure,
an output shaft which is rotatable relative to the structure and to which a wiper arm can be connected,
a direct-current electric motor for rotating the shaft,
a member which is movable relative to the structure and is kinematically connected to the shaft so that, when the motor rotates in one sense or the other, the member moves relative to the structure in one sense or the other,
a control and operating circuit carried by the structure and including:
at least one first and one second supply terminal for connection to the two poles of a direct-current voltage supply and one third supply terminal which can be connected to a pole of the supply by means of a manual control switch,
first and second output terminals connected to the motor, and
a plurality of control terminals, some of which are connected to the supply terminals,
a switching circuit which is connected to the supply terminals for switching the polarity of the voltage between the output terminals as a result of a command supplied to its input which is connected to one of the control terminals,
a plurality of sliding contacts which are carried by the support structure in frontal contact with the surface of the movable member and each of which is connected in an orderly manner to a control terminal, and
a plurality of electrically-conductive surfaces which are carried by the movable member and can cooperate with the sliding contacts so that:
- when the switch is closed, the motor is supplied with a voltage of a predetermined polarity and rotates the shaft in a predetermined sense,
- when the shaft reaches a first and, subsequently, a second predetermined angular position, the electrically-conductive surfaces which cooperate with some of the sliding contacts cut off the supply to the motor, subsequently short-circuit the motor, and then cause the switching circuit to operate so that the polarity of the supply to the motor is reversed and the motion of the shaft and of the member are reversed, and
- when the shaft reaches a third and, subsequently, a fourth angular position, the electrically-conductive surfaces cooperate with some of the sliding contacts and cut off the supply to the motor again, subsequently short-circuit the motor and cause the switching circuit to operate so that the supply to the motor has the original polarity and the motion of the shaft and of the member are reversed again, and so on.

Further characteristics and advantages of the invention will become clear from the detailed description which follows with reference to the appended drawings, provided purely by way of non-limiting example, in which:
Figure 1 is a schematic illustration of a device according to the invention,
Figure 2 is a partially-sectioned front view of an embodiment of the device according to the invention,
Figure 3 is a section taken on the line III-III of Figure 2,
Figures 4 and 5 show two alternative embodiments of the device shown in Figure 1, and
Figures 6 to 8 show further alternative embodiments, in which the control and operating circuit of Figure 5 is switched at a variable frequency.

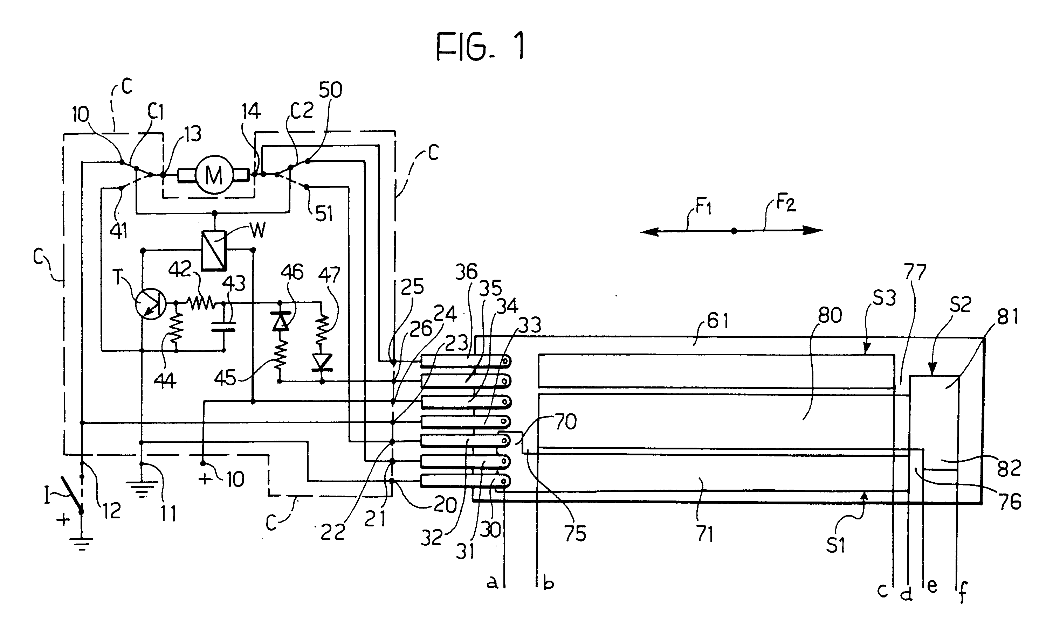

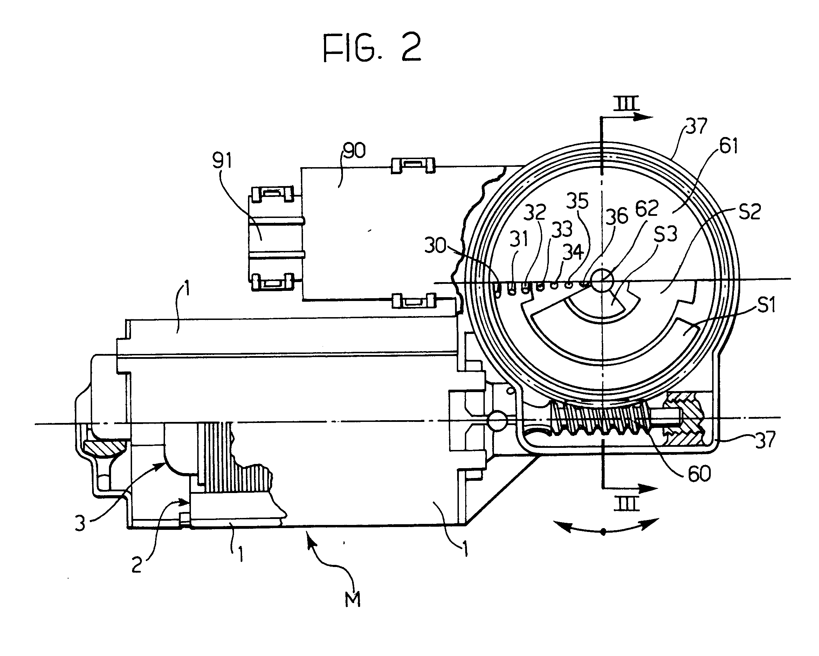

With reference to Figure 1, a device according to the invention includes a direct-current electric motor, indicated M in Figures 1 and 2, with permanent magnets. The motor includes, in known manner, a casing 1, a stator 2 with permanent magnets, and a rotor 3 (Figure 2).

With reference again to Figure 1, the motor M is connected electrically between the output terminals 13 and 14 of a control and operating circuit generally indicated C. This circuit has three input terminals 10, 11 and 12 of which, in the embodiment illustrated, the first is connected to the positive pole of a direct-current voltage supply (for example, the battery of a motor vehicle), the second is connected to the other pole of the direct-current voltage supply (in the embodiment illustrated, the negative pole of the supply is connected to earth), and the third can be connected to the positive pole of the supply by means of a manually-operated control switch I.

The circuit C also has seven terminals, indicated 20 to 26, which are defined below as the control terminals.

The control terminals 20, 23 and 24 are connected in an orderly manner to the input terminals 11, 12 and 10.

The circuit C includes a transistor T which, in the embodiment illustrated, is of the npn type. The collector-emitter path of the transistor is connected between the input terminals 10 and 11. The excitation winding W of a double switch or diverter is connected between the terminal 10 and the collector of the transistor T, and controls the positions of two movable contacts C1 and C2 connected to the output terminals 13 and 14. When the winding W is de-energised, the movable contacts can adopt the positions, shown by continuous lines in Figure 1, in which they contact the fixed contacts 40 and 50 connected to the input terminal 12 and to the control terminal 21, respectively.

When an electrical current flows through the winding W, the movable contacts C1 and C2 move to the positions shown by broken lines, in which they cooperate with respective fixed contacts 41 and 51, of which the former is connected to the input terminal 11 and the latter is connected to the control terminal 22.

One end of a resistor, indicated 42, is connected to the base of the transistor T and its other end is connected to a first plate of a capacitor 43, the other plate of which is connected to the emitter of the transistor. A resistor 44 is connected between the base and the emitter of T.

Two circuit branches, each including a resistor 45, 47 and a diode 46, 48, are connected in parallel between the control terminal 25 and the capacitor 43. The anode of the diode 46 is connected to the resistor 45 and its cathode is connected to the capacitor 43 so that, in series with the resistor 45, it helps to determine the time taken to charge the capacitor 43.

The anode of the diode 48 is connected to the capacitor 43 by means of the resistor 47 and its cathode is connected to the terminal 25. The diode 48 and the resistor 46 enable the capacitor 43 to be discharged rapidly when the terminal 25 is connected to earth.

The control terminal 26 is connected to the output terminal 14.

The control terminals 20 to 26 of the circuit C are connected in an orderly manner to contacts indicated 30 to 36 in Figures 1 and 2.

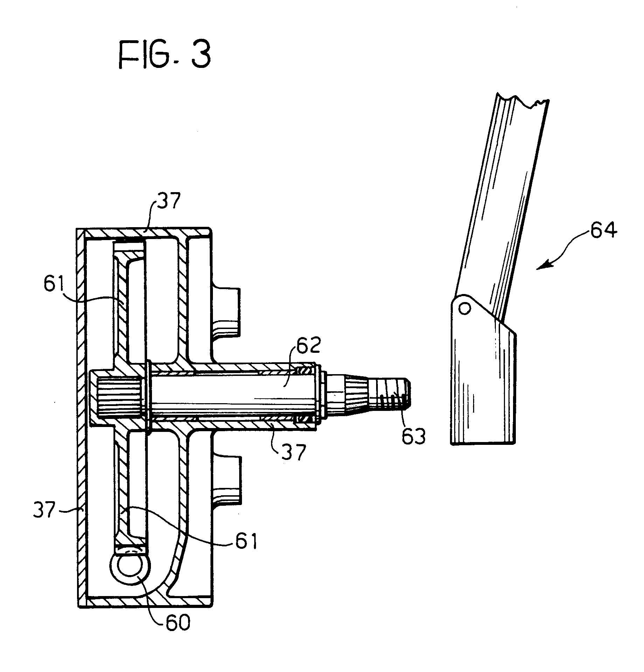

The contacts have respective first ends which are fixed (in known manner, not shown) to a support casing 36 (Figure 2) which is connected to the casing 1 of the electric motor M. A worm screw 60 connected to the shaft of the motor meshes with the external teeth of a disc-shaped member 61 which is rotatable in the support casing 37. A shaft (indicated 62 in Figure 3) fixed to the centre of the disc 61 constitutes the output shaft of the drive device as a whole. One end 63 of the shaft projects from the support casing 37 and a wiper arm, particularly for wiping the rear window of a motor vehicle, shown partially in Figure 3 in which it is indicated 64, can be connected thereto in known manner.

Conveniently, the disc-shaped element 61 is made of an electrically-insulating material and one of its faces has metallised portions which define three electrically-conductive surfaces, indicated S1, S2 and S3 (Figure 2).

For simplicity, the face of the disc 61 which faces the sliding contacts 30-36 is shown as a linear development, and thus is substantially rectangular, in Figure 1. Similarly, the electrically-conductive surfaces S1, S2 and S3, which are actually arcuate (Figure 2), are represented linearly in Figure 1.

With reference to the embodiment shown in Figure 2, when the motor M is activated, it may rotate the disc 61 in the sense indicated by the arrow F1 or in the sense indicated by the arrow F2.

With reference to Figure 1, translations of the rectangular element 61 in the directions indicated by the arrows, which are again indicated F1 and F2 respectively, correspond to the rotations of the disc 61 of Figure 2.

The geometrical characteristics of the electrically-conductive surfaces S1, S2 and S3 will now be described with reference to Figure 1. Naturally, these considerations apply, with the necessary alterations of details, to the electrically-conductive surfaces of the embodiment shown in Figure 2.

The surface S1 is substantially L-shaped and has a first portion 70 with which the sliding contacts 30, 31 32 are in contact at rest. The surface S1 has a further portion 71 which is longer than the first portion in the direction parallel to the arrows F1 and F2. The portion 71 is narrower, however, so that only the sliding contacts 30 and 31 can be in contact therewith.

The electrically-conductive surface S2 is substantially T-shaped and has a main portion 80 which extends longitudinally parallel to the arrows F1 and F2. The width of the portion 80 is such that the sliding contacts 32, 33 and 34 can engage its surface.

The left-hand end of the portion 80 of the surface S2, as seen in Figure 1, is spaced from the portion 70 of the surface S1 by a space 75. This space 75 is wider, in the direction parallel to the arrows F1 and F2, than the portion of the contact 32 which slides on the surfaces S1 and S2. In operation, when the member 61 moves in the direction indicated by the arrow F1, the sliding contact 32 is thus initially in contact with the arm 70 of the surface S1 and then contacts the left-hand end of the arm 80 of the surface S2 after it has completely left the arm 70 of the surface S1 so that short-circuiting between S1 and S2 is prevented.

Finally, the surface S2 has two lateral end extensions indicated 81 and 82.

The portion 81 extends in a position such that it can be contacted solely by the sliding contact 35 before the sliding contacts 30 and 31 leave the portion 71 of the surface S1 as a result of the movement of the element 61 in the direction indicated by the arrow F1.

In Figure 1, the end portion of the surface S1 which faces the portion 82 of the surface S2 is almost aligned with the end portion of the portion 81 which faces the surface S3; when the sliding contacts 30 and 31 leave the surface S1, the sliding contact 35 has thus already engaged the surface S2.

The portion 82 of the surface S2 extends in a manner such that it can be engaged solely by the sliding contact 31.

The portion 82 of S2 is spaced from S3 by a space 76 of a width such that the sliding contact 31 engages the surface S2 only after it has left the surface S1, so as to avoid short-circuiting between the surfaces S1 and S2.

When the element 61 moves in the direction indicated by the arrow F1, the contact 31 engages the portion 82 of the surface S2 after the sliding contact 35 has engaged the portion 81 of that electrically-conductive surface.

The electrically-conductive surface S3 extends parallel to the arrows F1 and F2 and is substantially rectangular and of a width such that it can be engaged by the sliding contacts 35 and 36; the space 77 which separates it from the electrically-conductive surface S2 is such that the sliding contact 35 engages the surface S2 only after it has left the surface S3, so as to avoid short-circuiting between S1 and S3.

As stated above, in the deactivated condition, the wiper device is in the configuration shown in Figures 1 and 2. In this condition, the sliding contacts 30 to 36 and the member 61 are in the relative positions shown, in particular, in the positions indicated a in Figure 1. In this situation, the sliding contacts 30, 31 and 32 contact the electrically-conductive surface S1. The fixed contacts 50 and 51 are thus both connected to earth.

If, in this situation, the switch I is closed, a current flows through the motor M, passing through the movable contact C1 (which touches the fixed contact 40) and the movable contact C2 (which touches the fixed contact 50) and then through the sliding contact 31, the electrically-conductive surface S1, and the sliding contact 30.

The operation of the motor M moves the wiper arm 64 and the member 61 associated therewith in the direction indicated by the arrow F1. After a certain movement in that direction, the relative positions of the sliding contacts and of the member 61 are those indicated by the line b in Figure 1; the sliding contacts 32, 33 and 34 touch the electrically-conductive surface S2, the sliding contacts 35 and 36 touch the electrically-conductive surface S3 (accelerating the discharge of the capacitor 43 through the resistor 47 and the diode 48 during the cycles following the first cycle just described so that the capacitor 43 is almost completely discharged when the next charging stage starts, thus making the switching times of the control and switching circuit C more uniform) whilst the sliding contacts 30 and 31 continue to engage the surface S1. The fixed contact 50 thus remains connected to earth and the fixed contact 51 is connected to the positive pole of the supply voltage by means of the electrically-conductive surface S2 and the sliding contacts 32 and 34. The electric motor M continues to be supplied with a voltage of the same polarity and the wiper arm thus continues to move in the original direction. The member 61 continues to move in the direction indicated by the arrow F1.

The situation remains unchanged until the sliding contacts 30 to 36, with respect to the member 61, the relative positions indicated c in Figure 1. It should be noted that, between the relative positions indicated b and d in Figure 1, the motor M continues to be supplied even if the switch I is opened. In fact, if the switch is opened, the fixed contact 40 is in any case connected to the positive pole of the voltage supply by means of the sliding contact 33, the electrically-conductive surface S2, the sliding contact 34, and the input terminal 10.

Between the relative positions c and d, the sliding contacts 35 and 36 leave the electrically-conductive surface S3 and engage the electrically-insulated space 77.

When the sliding contacts 30 to 36 are between the relative positions indicated d and e in Figure 1, the fixed contact 50 is disconnected from the earth and the supply of current to the motor M is therefore cut off. The sliding contact 35 engages the portion 81 of the electrically-conductive surface S2 which is connected to the positive pole of the supply by means of the sliding contact 34. The capacitor 43 thus starts to be charged with a time constant which depends on its capacitance as well as on the resistances of the resistors 42, 44 and 45. Conveniently, this time constant is such that the transistor T is made conductive only when the sliding contacts 30 to 36 are between the positions indicated e and f in Figure 1 relative to the member 61.

When the sliding contacts are between the positions e and f, the contact 31 engages the electrically-conductive surface S2 which is still connected to the positive terminal of the supply. The output terminals 13 and 14 of the control circuit C are thus both connected to the positive pole of the voltage supply and the motor M is short-circuited and stops almost instantaneously. Between the relative positions e and f, the transistor T is conductive and causes the winding W to be excited, which causes the movable contacts C1 and C2 to switch. The movable contact C1 thus contacts the fixed contact 41 which is connected to the earth and the contact C2 contacts the fixed contact 51 which is connected to the electrically-conductive surface S2 which is still connected to the positive pole of the voltage supply.

A current thus flows through the motor M in the direction opposite that in which it flowed previously and the motion of the motor is reversed, causing a corresponding reversal of the motion of the wiper arm 64 and of the member 61, which now starts to move in the direction indicated by the arrow F2.

The motor M continues to be driven in the same sense until the sliding contacts 30 to 36 again reach the positions indicated b, relative to the member 61. Until these positions are reached, the motor M is supplied constantly, even if at the time in question the switch I has been opened.

In the portion of its travel from c to b, the sliding contact 36 brings the electrically-conductive surface S3 to the same polarity (positive) as the output terminal 14 and the capacitor 43 is thus constantly supplied through the sliding contact 35, the resistor 45 and the diode 46 and holds its charge until the contacts 35 and 36 leave the surface S3.

When they have passed the relative position b during their return travel, the sliding contacts 33 and 34 leave the electrically-conductive surface S2. The fixed contact 51 is therefore no longer connected to the positive terminal of the voltage supply. Thus, the motor M is no longer connected to the positive pole of the voltage supply.

The sliding contacts 35 and 36 leave the track S3 and the capacitor 43 starts to discharge through the resistors 42 and 44.

As soon as the sliding contact 32 has left the surface S2 and starts to contact the surface S1, it is also connected to the earth. Thus, the motor M is in fact short-circuited and promptly stops. The capacitor 43 discharges until the transistor T becomes non-conductive and the current stops flowing through the winding W. The movable contacts C1 and C2 correspondingly re-engage the fixed contacts 40 and 50 respectively (under the action of resilient biasing means, not shown).

Conveniently, the time constant of the discharge of the capacitor 43 is determined so as to cause the winding W to be de-energised after the motor M has been braked electrically by being short-circuited.

The starting position is thus regained at this point. If, in this situation, the switch I is still closed, operation continues in the manner described above. If the switch I is open, however, the device stops in the condition shown in Figures 1 and 2.

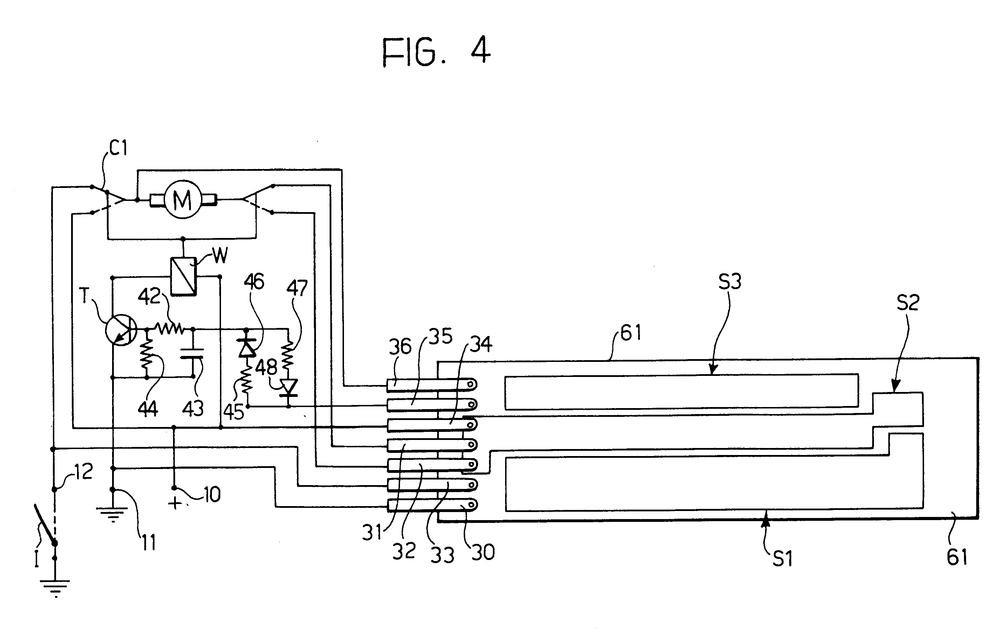

Figure 4 shows a device with a configuration which is functionally identical to that shown in Figure 1 but which differs therefrom in that:
- the input terminal 12 is connected to earth by means of the manual switch I,
- the positions of the blade contacts 31, 32 and 33 are changed and the contact 33 is connected to earth instead of to the positive pole as in Figure 1, and
- the shapes of the electrically-conductive surfaces S2 and S2 are different.

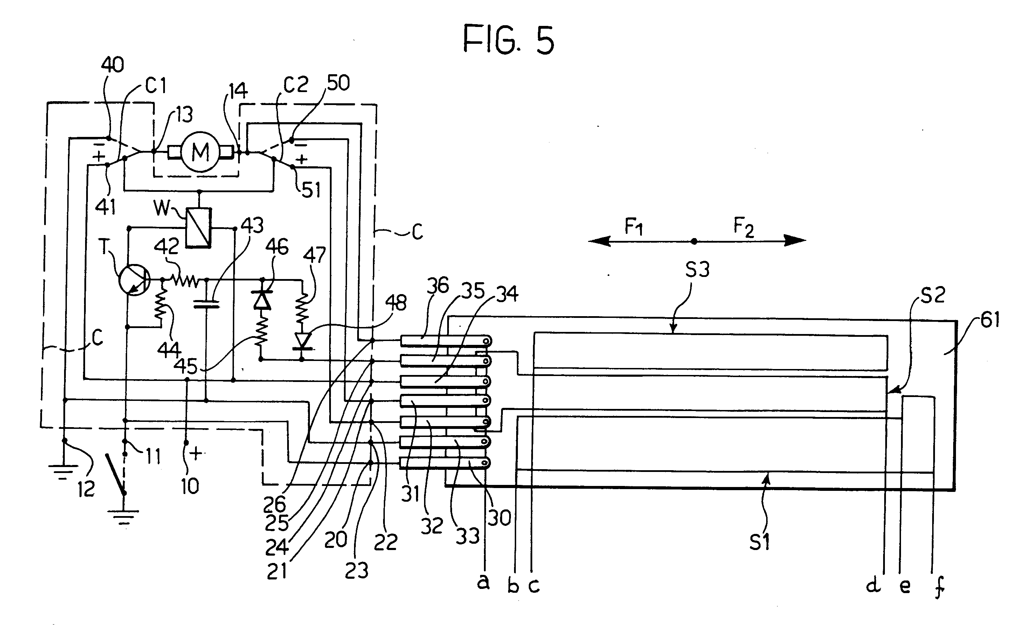

Figure 5 is another configuration which is functionally identical to that shown in Figure 1 and differs therefrom in that:
- the terminal 11 is connected to earth through the switch I,
- the terminal 12 is connected directly to earth,
- the positions of the blade contacts 31, 32 and 33 are changed and the contact 33 is connected to earth instead of to the positive pole as in Figure 1,
- the shapes of the electrically-conductive surfaces S1 and S2 are different,
- the polarities of the electrically-conductive surface S3 when the member 61 moves in the directions indicated by the arrows F1 and F2 are reversed, and
- the positions of the movable contacts C1 and C2 at rest are different so that, when the winding W of the switch or diverter is de-energised, they connect the fixed contacts 41 and 51 to the output terminals 13 and 14.

In the deactivated condition, the wiper device is in the position a shown in Figure 5; in this situation, the sliding contacts 31, 32, 34, and 35 contact the electrically-conductive surface S2 which is connected, by means of the sliding contact 34, to the input terminal 10 which has positive polarity; the transistor T is conductive since a voltage is applied constantly to the capacitor 43 as a result of its connection to the surface S2 by means of the sliding contact 35; the fixed contacts 41, 50 and 51 have the same polarity as S2, in the case of the terminal 41 because it is connected directly to the positive pole, and in the case of the terminals 50 and 51 by means of the sliding contacts 31 and 32; the fixed contact 40 is connected directly to the opposite pole.

If, in this situation, the switch I is closed, a current flows through the switch winding W and the movable contacts C1 and C2 move, connecting the fixed contacts 40 and 50 to the output terminals 13 and 14; the current flows through the motor M, its path including the input terminal 10, the sliding contact 34, the electrically-conductive surface S2, the sliding contact 31 which is connected to the fixed contact 50, the movable contact C2, the output terminals 14 and 13, the movable contact C1, and the fixed contact 40 which is connected to the input terminal 12. The operation of the motor M moves the wiper arm 64 and the member 61 associated therewith in the direction indicated by the arrow F1 and the sliding contacts 30 to 36 successively occupy the positions b to f.

In position b, the sliding contacts 31 and 34 engage the surface S2 which has positive polarity, the contact 35 is leaving the surface S2, the contacts 30, 32 and 33 start to engage the surface S1 which assumes negative polarity by means of the contacts 30 and 33, there is no change in the supply circuit of the motor M, and the member 61 continues to move in the direction indicated by the arrow F1.

In position c, the contacts which change their conditions from those of position b are the contacts 35 and 36 which come into contact with the electrically-conductive surface S3 which assumes positive polarity by means of the contact 36 which is connected to the output terminal 14, and the capacitor 43 is kept under charge by the sliding contact 35.

From position c to position d, the connections remain unchanged.

From position d to position e, the sliding contacts 31 and 34 leave the surface S2 and the motor M is no longer supplied; the contacts 35 and 36 have left the surface S3 and the capacitor 43 begins to be discharged through the resistors 42 and 44.

In the region between e and f, the sliding contact 32 engages the surface S1 which has negative polarity, giving the fixed contact 50 the same polarity; the output terminals 13 and 14 are thus both connected to earth and the motor M is short-circuited and stops almost instantaneously.

The capacitor 43 is discharged until the transistor T becomes non-conductive, cutting off the current through the winding W; the movable contacts C1 and C2 switch to the fixed contacts 41 and 51 which are connected respectively to the positive supply terminal 10 and to the sliding contact 32 which engages the surface S1 having negative polarity since it is connected by means of the sliding contacts 33 and 30 to the negative supply terminals 12 and 11, respectively; the polarities of the output terminals 13 and 14 are now reversed and a reversed current flows through the motor M, the motion of which is reversed correspondingly to reverse the motion of the wiper arm 64 and of the member 61 which now starts to move in the direction indicated by the arrow F2.

The supply to the motor M remains unchanged until the sliding contacts have travelled along the portion between the positions f and b; it should be noted that, in the region between d and c, the contacts 35 and 36 engage the surface S3 which has negative polarity since it is connected, by means of the contact 36, to the output terminal 14 which is now negative; the contact between the terminal 35 and S3 (which has negative polarity) accelerates the discharge of the capacitor 43.

In the region between the positions c and a, the contact 36 is disengaged from S3; the contact 35 leaves S3 and engages S2, the contacts 34 and 31 still engage S2, the contact 32 has left S1 and engages S2, the contacts 30 and 33 are disengaged from S1, and the motor M changes from the supplied condition, through the non-supplied condition, to the condition in which its supply is short-circuited since the output terminals 13 and 14 have the same polarity because they are connected respectively to the supply terminal 10 and to the sliding contact 31 which engages the surface S2 which is connected to the positive terminal 10 by means of the sliding contact 34. The transistor T becomes conductive and excites the winding W which switches the movable contacts C1 and C2 to the fixed contacts 40 and 50; the polarity at the output terminals 13 and 14 is reversed, the motion of the motor M is reversed, and the cycle starts again in the manner described above.

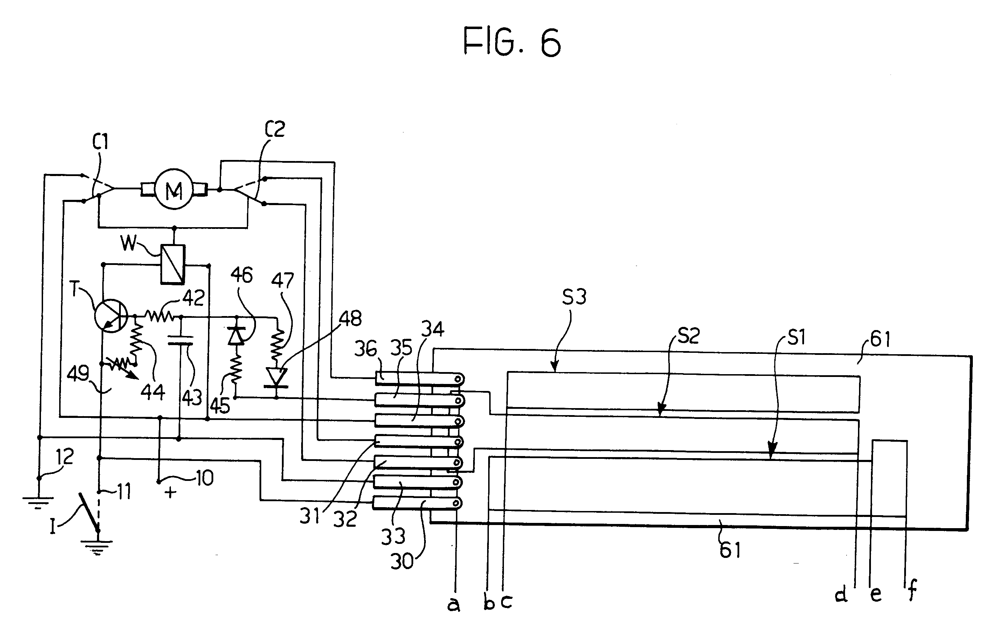

Figures 6, 7 and 8 show two variants which are already partially known for other applications, and each of which allows for at least two different operating intervals of the switching and control circuit C, and hence at least two different frequencies of the strokes of the wiper arm 64.

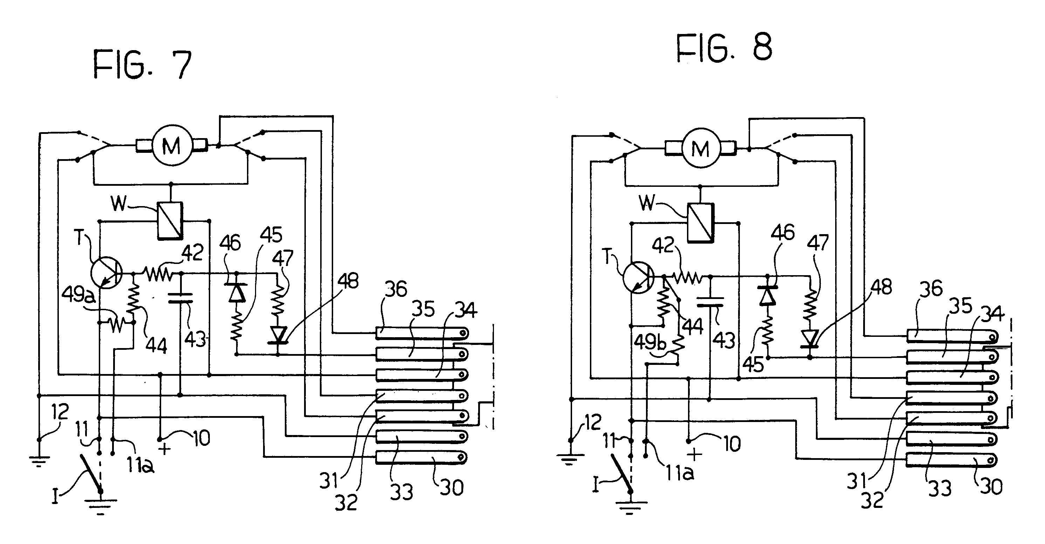

These variants, which are applied, purely by way of example, to the control circuit C shown in Figure 5, consist of the connection, in parallel with the capacitor 43, either of a variable resistor (Figure 6) or of several resistors connected to earth by different routes (Figures 7 and 8).

Figure 6 shows a variant with a variable resistor; the resistors 42 and 44 have resistances such that the switching circuit C operates at a moment immediately after the motor M stops when its supply is short-circuited (the minimum interval corresponding to the maximum frequency of the strokes of the wiper arm 64); the connection of a variable resistor 49 in series with the resistor 44 means that, in theory, an infinite number of frequencies of the stroke of the wiper arm 64 is available, from a zero frequency to the maximum frequency permissible for the proper operation of the system. The control for varying the resistance of the variable resistor 49 and/or the resistor itself may be within the car, for example, on the steering column.

Figure 7 shows a variant which enables the intervals at which the switching circuit C operates to be varied with the use of a resistor 49a in series with the resistor 44; the resistors 42, 44 and 49a in series have resistances, for example, such that the operating interval is the designed maximum; the resistors 42 and 44 have resistances such that the switching interval is the designed minimum (the minimum interval).

When the switch I connects the supply terminal 11 to earth, the switching device operates at the maximum interval which corresponds to the minimum frequency of the strokes of the wiper arm 64; when the switch I also connects the supply terminal 11a to earth, the resistance 49a is excluded from the circuit through which the capacitor 43 is discharged and the device operates after a minimum interval and the wiper arm 64 operates at its maximum frequency.

The solution illustrated in Figure 8 behaves in a similar manner; the operating interval of the switching and control circuit C is reduced when the switch I engages both the terminals 11 and 11a since the resistances 44 and 49b are in parallel.

In any case, the control circuit C may conveniently be formed on a substrate such as that indicated 90 in Figure 2 with a multipole connector 91 for connection to the positive and negative terminals of the voltage supply and to the switch I.

Naturally, the principle of the invention remaining the same, the forms of embodiment and details of construction may be varied widely with respect to those described and illustrated purely by way of non-limiting example, without thereby departing from the scope of the present invention.

The same functions can thus be achieved with electrically-conductive surfaces with different geometrical shapes from those specifically described and illustrated.

## Claims

1. A reciprocating drive device, particularly for a wiper arm (64) for the rear window of a motor vehicle, including:
a support structure (1, 37),
an output shaft (62) which is rotatable relative to the structure and to which a wiper arm (64) can be connected,
a direct-current electric motor (M) for rotating the shaft (62),
a member (61) which is movable relative to the structure (1, 37) and is kinematically connected to the shaft (62) so that, when the motor (M) rotates in one sense or the other, the member (61) moves relative to the structure (1, 37) in one sense (F1) or the other (F2),
a control and operating circuit (C) carried by the structure and including:
at least one first, one second, and one third supply terminal (10, 11, 12) of which two are for connection to the two poles of a direct-current voltage supply, and the third can be connected to a pole of the supply by means of a manual control switch (I),
first and second output terminals (13, 14) connected to the motor (M), and
a plurality of control terminals (20 to 26), some of which are connected to the supply terminals (10 to 12), and
a switching circuit (T, W, C1, C2, 42-48) which is connected to the supply terminals (10, 11, 12) for switching the polarity of the voltage between the output terminals (13, 14) as a result of a command supplied to its input which is connected to one of the control terminals (25),
a plurality of sliding contacts (30 to 36) which are carried by the support structure (1, 37) in frontal contact with the surface of the movable member (61) and each of which is connected in an orderly manner to a control terminal (20 to 26), and
a plurality of electrically-conductive surfaces (S1, S2, S3) which are carried by the movable member (61) and can cooperate with the sliding contacts (30 to 36) so that:
- when the switch (I) is closed, the motor (M) is supplied with a voltage of a predetermined polarity and rotates the shaft (62) in a predetermined sense,
- when the shaft (62) reaches a first and, subsequently, a second predetermined angular position, the electrically-conductive surfaces (S1, S2, S3) which cooperate with some of the sliding contacts (30 to 36) cut off the supply to the motor (M), then short-circuit the motor (M), and subsequently cause the switching circuit (T, W, C1, C2, 42-48) to operate so that the polarity of the supply to the motor (M) is reversed and the motion of the shaft (62) and of the member (61) are reversed, and
- when the shaft (62) reaches a third and, subsequently, a fourth angular position, the electrically-conductive surfaces (S1, S2) cooperate with some of the sliding contacts (30 to 36) and cut off the supply to the motor again and then short-circuit the motor (M) and cause the switching circuit (T, W, C1, C2, 42-48) to operate so that the supply to the motor has the original polarity and the motion of the shaft (62) and of the member (61) are reversed again, and so on.

2. A device according to Claim 1, characterised in that the switching circuit includes an electromagnetically operated double switch (W, C1, C2) which has two movable contacts (C1, C2) for controlling the connections between the output terminals (13, 14), the input terminals (10, 12) and at least some control terminals (20, 26), and which has a control solenoid (W) which is piloted by a transistor (T) controlled by an RC circuit (42-48) whose connection to the voltage supply is controlled by means of some control terminals (24, 25, 26), the associated sliding contacts (34, 35), and the electrically-conductive surfaces (S2, S3).

3. A device according to Claim 2, characterised in that the RC circuit (42-48) has charging and discharging time constants which differ from each other and are adjustable.

4. A device according to any one of the preceding claims, characterised in that the control circuit has seven control terminals (20 to 26) associated respectively with six sliding contacts (30 to 36) which can cooperate with three electrically-conductive surfaces (S1, S2, S3) carried by the member (61).

5. A device according to Claim 2 or Claim 3 and Claim 4, characterised in that the movable member (61) carries an electrically-conductive surface (S3) which can cooperate with at least one first sliding contact (36) connected to one of the output terminals (14) of the control circuit, and with a second sliding contact (35) connected to the capacitor (C) of the RC circuit so as to accelerate the discharge of the capacitor (C).

6. A device according to any one of the preceding claims, characterised in that the first two supply terminals (10, 12, Figures 5-8) are intended to be connected permanently to the voltage supply and the third supply terminal (11, Figures 5 to 8) is connected to a terminal of the switching circuit (T, W, C1, C2, 42-48) so that the manual control switch (I) can cause the entire device to operate by supplying current to the said terminal of the switching circuit (T, W, C1, C2, 42-48).

7. A device according to any one of the preceding claims, characterised in that the switching circuit includes means (49, 49a; Figures 6 to 8) for varying the switching frequency.
